# EUROPEAN PATENT APPLICATION

(11) **EP 4 736 987 A1**
(43) Date of publication of application: **06.05.2026**
(21) Application number: 25212884.8
(22) Date of filing: 03.11.2025
(51) Int. Cl.: B01D 46/00, B01D 39/16, B01D 46/54

(54) **FILTER ELEMENT**

(30) Priority: 04.11.2024 CH 11962024
(71) Applicant: Zehnder Group International AG, 5722 Gränichen (CH)
(72) Inventor: Poppelaars, Ruud, 5251 Vlijmen GR (NL)
(74) Representative: Rentsch Partner AG

(57) **Abstract**

The present disclosure relates to an air filter element (1) for filtering polluted air, which comprises a perforated top layer (21) which comprises a number of first openings (211) enabling unfiltered air to enter the lattice structure. The lattice structure (2) further comprises a perforated bottom layer (22) which comprises a number of second openings (221) enabling filtered air to exit the lattice structure and a plurality of connection elements (23), which extend from the perforated top layer (21) to the perforated bottom layer (22). The air filter element (1) further comprises electrostatically charged fibers (3), which are arranged such that they cover the number of first openings (211) and / or the number of second openings (221) and are configured to electrostatically attract particles from the polluted air passing through the air filter element. The present disclosure further relates to a method for producing an air filter element (1), an air filtering device (4) for filtering polluted air, a heat recovery unit (6) and the use of an air filter element (1) for the air filtering device (4) or the heat recovery unit (6).

## Description

### FIELD OF THE DISCLOSURE

The present disclosure relates to an air filter element for filtering polluted air, a method for producing an air filter element, an air filtering device, a heat recovery unit and a use of the air filter element for the air filtering device or the heat recovery unit.

### BACKGROUND OF THE DISCLOSURE

Air filter elements and air filtering devices for filtering polluted or contaminated air are known. Known air filter elements typically comprise fibrous or porous materials, which are supposed to remove particulates such as smoke, dust, pollen, mold, viruses and bacteria from an airstream passing through the air filter element. Besides removing particulates, filter elements can in addition comprise an adsorbent or catalyst such as charcoal which can also remove odors and gaseous pollutants such as volatile organic compounds or ozone. These air filter elements are used in applications where air quality is important, for example in building ventilation systems.

### SUMMARY OF THE DISCLOSURE

Air filtering devices suitable to be arranged in a volume of air are known. Conventional air filtering devices mostly comprise an air moving unit, like a fan, which guides an air flow through at least one filter in a forced manner, for filtering the respective volume of air. After a predetermined time and in particular dependent on the degree of contamination of the filtered volume of air, the air filter element needs to be replaced. The replacement is conventionally either done in predetermined time intervals by respective personnel, which typically determines the replacement intervals according to their personal experience. The conventional result is that many times the replaced air filter element is not contaminated enough which would justify its replacement or the air filter element is contaminated to much which results in a poor cleaning of the air. The overall result is that the maintenance personnel controls and maintains the respective air filter devices rather more often than necessary to avoid a poor cleaning result. This further results in high maintenance costs because manually checking the different air filtering devices is labor intense.

To increase the lifespan of industrial air filter elements and thereby be able to stretch the maintenance intervals of the air filtering device, pre-filters can be used. A pre-filter is typically a filter configured to remove larger particles from the volume of air before the volume of air reaches the main filter. Pre-filters are installed as the first stage of filtration, designed to capture the larger particles and prevent them from entering the air filter element. Pre-filters are foreseen to filter out particulates such as dust, hair, insects, pollen and various fibers. Air filtering devices equipped with pre-filters are used in buildings, transportation, public areas and industrial workplaces. Pre-filters are typically made from a variety of materials, such as foam, mesh, or fiberglass. The choice of material depends on the specific requirements of the air filtering device and the types of particles the pre-filter needs to capture. Regardless of the material, the primary function of a pre-filter is to trap larger particles before they reach the more advanced main filter element in the air filtering device.

An objective of the present disclosure can be seen in proving an air filter element with an improved lifespan and an air filtering device with prolonged maintenance intervals.

The present disclosure relates to an air filter element for filtering polluted air. The air filter element typically comprises a lattice structure which can comprise a perforated top layer, which defines a top surface of the lattice structure and comprises a number of first openings, enabling unfiltered air to enter the lattice structure. The lattice structure typically further comprises a perforated bottom layer, which defines a bottom surface of the lattice structure and comprises a number of second openings, enabling filtered air to exit the lattice structure. The lattice structure typically further comprises a plurality of connection elements, which extend from the perforated top layer to the perforated bottom layer and interconnect the perforated top layer to the perforated bottom layer.

The lattice structure is typically in the form of a sandwich structure with the connection elements being sandwiched between the perforated top layer and the perforated bottom layer. The lattice structure may be inherently stable, so that the perforated top layer is separated from the perforated bottom layer by means of the plurality of connection elements. Inherently stable is to be understood that the perforated top layer does not come in contact with the perforated bottom layer even without electrostatically charged fibers being arranged between the perforated top layer and the perforated bottom layer. Good results can be achieved, when the air filter element further comprises electrostatically charged fibers, which are arranged such that they cover the number of first openings and / or the number of second openings and are configured to electrostatically attract particles from the polluted air passing through the air filter element. The electrostatically charged fibers may be made from a polymer material which can be electrostatically charged. Good results can be achieved when the electrostatically charged fibers are made from a polyester, polyether or polyolefin. The electrostatically charged fibers may have a length being from 10 mm to 2000 mm, preferably from 100 mm to 1000 mm and more preferably from 200 mm to 600 mm and a diameter being from 0.5 µm to 100 µm, preferably from 2.5 µm to 50 µm and more preferably from 5 µm to 15 µm. A particular advantageous filter element can be realized when the electrostatically charged fibers are at least partially made from polypropylene. Polypropylene provides the desired electrostatic properties for capturing the particles from the air. Alternatively or in addition, the electrostatically charged fibers may be made from poly(meth)acrylates, such as polyvinyl acrylates or polyvinyl methacrylate. The term "acrylate" encompasses both acrylic acids as well as their esters. The electrostatically charged fibers can also be made from a mix of materials. The electrostatically charged fibers can comprise a polypropylene substrate/carrier with polyacrylonitrile fibers being needled onto the substrate/carrier.

Typical dimensions of the filter element include diameters which are between 75 mm and 200 mm. Good results can be achieved with filter elements, which have at least partially a round or rectangular shape. A common size for a round filter element is a diameter between 75 mm and 200 mm, preferably 125 mm. Rectangular filter elements can be e.g. 160 mm x 500 mm, providing sufficient surface area for inflow and outflow. Square filter elements can be e.g. 1000 mm x 1000 mm, 750 mm x 750 mm or 500 mm x 500 mm. The filter elements can in addition be limited by a circumferential frame, which provides improved stability of the filter element.

The perforated top layer and the perforated bottom layer are typically quasi two-dimensional, which is to be understood in the context of the present disclosure that the extension in the height direction is at least an order of magnitude smaller than the extension in the width direction and the extension in the length direction. The perforated top layer and / or the perforated bottom layer can be a web. The perforated top layer and / or the perforated bottom layer can be made from a flexible material, preferably from a thermoplastic elastomer. Flexible is to be understood in the context of the present disclosure as to be manually bendable and elastically deformable. The perforated top layer and / or the perforated bottom layer may be made from a polymer material, which is configured to be electrostatically chargeable. The perforated top layer and / or the perforated bottom layer may be made from the same material as the electrooptically fibers, which is beneficial for recycling purposes.

The perforated top layer and / or the perforated bottom layer can be a web. The web can be formed by a plurality of strings and a majority of the connection elements may be attached to the strings. The strings may be made from individual fibers/yarns to increase the surface of the strings. The yarn may be made from intertwined fibers and / or the strings may be made from intertwined yarns. The web may preferably cover less than 3/4, preferably less than 2/3 and most preferably less than 1/2 of the layout of the perforated top or bottom layer. The web may be in the form of a honeycomb structure. A hexagon is particularly stable, as it distributes the external force evenly around the shape. A honeycomb structure makes components lighter because less material is required. The shape of the first and second openings can be nevertheless also e.g. round, oval, squared, rectangular, or a combination thereof. The perforated top layer and the perforated bottom layer typically serve at least two purposes. First, they limit the air filter element and the typically therein arranged filter material. Second, the perforated top layer and the perforated bottom layer can itself act as a filter element and already filter out particularly large particulates and prevent them from entering the filter element, thereby functioning like a sieve.

The connection elements typically serve two purposes. First, the connection elements interconnect the perforated top layer and the perforated bottom layer, together providing the mechanical integrity of the lattice structure. Second, the connection elements act as spacers between the perforated top layer and the perforated bottom layer to provide a cavity between the perforated top layer and the perforated bottom layer as receiving space for the filter material. The filter material can be in principle a number of different filter material, like foam, mesh, or fiberglass. Particularly good results can be achieved if the electrostatically charged fibers are arranged at least partially within the lattice structure between the perforated top layer and the perforated bottom layer. This variation accounts for a compact design and efficient filter results. Alternatively or in addition, electrostatically charged fibers can be arranged outside the lattice structure, preferably being arranged on the perforated top and / or bottom layer.

The electrostatically charged fibers may extend along a longitudinal direction and may be arranged within the lattice structure between the perforated top layer and the perforated bottom layer in a wavy manner. This has the favorable effect, that the polluted air, which is passing the fibers, travels a longer distance compared to an air filter element, in which the fibers are arranged parallel to the perforated top or bottom layer. This leads to improved filtering results.

To attach the electrostatically charged fibers to the lattice structure, the electrostatically charged fibers can be arranged such they form a woven structure with the connection elements. Besides weaving the fibers together with the connection elements, which may be also in the form of fibers, the electrostatically charged fibers may be bonded to the connection elements by an adhesive or are bonded to the connection elements by a thermal bond. This ensures that the electrostatically charged fibers remain stationary with respect to the connection elements, even when the air filter is installed and the electrostatically charged fibers are exposed to negative pressure or overpressure during operation.

A majority of the connection elements may be flexible fibers which are bonded to the perforated top layer and the perforated bottom layer, preferably thermally or by an adhesive. This leads to a durable and lightweight filter element. Good results can be achieved when the entire lattice structure and the electrostatically charged fibers are made from a polymer material which is resistant to solvents. This allows the filter element to be used in workplace settings where it is subjected to aerosols. The connection elements can extend along a longitudinal direction and have a length being from 3 mm to 100 mm, preferably from 20 mm to 50 mm and more preferably from 15 mm to 35 mm and / or a diameter being from 10 µm to 250 µm, preferably from 25 µm to 150 µm, more preferably from 50 µm to 100 µm. The diameter of the first and / or second openings is typically in a range between 3 mm to 30 mm, preferably 5 mm to 10 mm. Such diameters provide a good compromise between filter effect and mechanical stability.

The present disclosure further relates to a method for producing an air filter element, preferably an air filter element as described above. The method typically comprises at least the following method steps:
- Providing a lattice structure comprising:
   a. a perforated top layer which defines a top surface of the lattice structure and which comprises a number of first openings enabling unfiltered air to enter the lattice structure;
   b. a perforated bottom layer, which defines a bottom surface of the lattice structure and comprises a number of second openings enabling filtered air to exit the lattice structure;
   c. a plurality of connection elements, which extend from the perforated top layer to the perforated bottom layer and interconnect the perforated top layer to the perforated bottom layer, and
- Arranging electrostatically charged fibers in the lattice structure, which electrostatically charged fibers are arranged such that they cover the number of first openings and / or the number of second openings and are configured to electrostatically attract particles from the polluted air passing through the air filter element.

The lattice structure may be inherently stable, so that the perforated top layer is separated from the perforated bottom layer by means of the plurality of connection elements, preferably even before arranging the electrostatically charged fibers in the lattice structure. Firstly, this allows the prefabricated lattice structures being used for a variety of fibers for different filtering purposes, therefore allowing a modular filter concept. Secondly, by providing an inherently stable lattice structure, the fibers can be inserted faster and in a higher volume in a subsequent production step, making the production process more cost efficient and faster and improving the filter effect of the filter element.

The electrostatically charged fibers may be blown into the lattice structure. Alternatively or in addition, the electrostatically charged fibers can be arranged such they form a woven structure with the connection elements. Good results can be achieved if the electrostatically charged fibers are bonded to the connection elements by an adhesive or are bonded to the connection elements by a thermal bond.

All features disclosed in the context of the air filter element can be also applied to the method for producing an air filter element and vice versa.

The present disclosure further relates to an air filtering device for filtering polluted air. The air filtering device typically extends along a flow path and may comprise along the flow path a first air filter unit, which can comprise at least one air filter element. The air filtering device typically further comprises an air moving unit, which is configured to move unfiltered air from outside the air filtering device through the first air filter unit which is configured to filter the outside air.

The air moving unit may partially define an outer hull of the air filtering device. In other words, the air moving unit may form partially the outer housing of the air filtering device. The air moving unit is configured to move air through the air filtering device. The air moving unit may comprise a fan or a blowing device, which is configured to move air through the first air filter unit. The air moving unit of the air filtering device forms an air stream through the air filtering device and is preferably arranged on the suction side of the air filter device, i.e. down-stream with respect to the air filtering device.

The first air filter unit may determine partially the outer hull of the air filtering device. In other words, the first air filter unit preferably forms partially the outer contour or housing of the air filtering device. The air filter element may be arranged within the first air filter unit inclined with respect to the flow path, preferably by an angle being from 10° to 80°, preferably between 15° and 45° and more preferably between 20° and 35°. This arrangement has the advantage that the cross-sectional area of the filter element is improved. If the filter element is arranged parallel or perpendicular to the flow path, the air passes through the filter element essentially perpendicular to the perforated top or bottom layer. Instead, if the air filter element is arranged inclined with respect to the flow path, the air passes through the filter element diagonally and therefore travels a longer distance, which increases the filter effect.

The first air filter unit can comprise compartments, which are each configured to receive at least two air filter elements. The compartments preferably comprise slots in which at least one air filter element can be inserted. This allows for an easy replacement of the filter elements. To allow that the air filter elements may be arranged within the first air filter unit inclined with respect to the flow path, the compartments can be V-shaped and two air filter elements may be arranged within each compartment, preferably opposite to each other in the V-shaped compartment.

The air filtering device may comprise a second air filter unit which is arranged along the flow path downstream of the first air filter unit and is configured to clean the air pre-cleaned by the first air filter unit. In a variation, the air filtering device further comprises at least one second air filter unit comprising at least one additional air filter, arranged in air flow direction downstream with respect to the first air filter unit and configured to filter air during operation of the air filtering device. The second air filter unit may comprise a different kind of air filter for filtering another kind of contamination from the air. The second air filter unit may comprise at least one of: a HEPA filter, a cassette filter, a compact filter and a bag filter.

Good results can be achieved when the first and / or second air filter unit is movable interconnected, in particular pivotable or slidably interconnected, to the air filtering device, such that the respective air filter unit is by a movement, in particular by a pivot and / or slide movement, moveable from its operating position to its maintenance position, enabling access to the at least one additional air filter. The operating position is thereby the position in which the first and / or second air filter unit is arranged within the housing of the air filtering device. The maintenance position is the position in which the first and / or second air filter unit is arranged at least partially outside the housing of the air filtering device to allow access to the respective air filter.

The first air filter unit may be interconnected via a first hinge to the second air filter unit. And the second air filter unit can be interconnected via a second hinge to the air moving unit. All of the features described above and hereinafter with respect to the first air filter unit may also apply mutatis mutandis to the second air filter unit. The movement of the second air filter unit from the operating position to the maintenance position may also move the first air filter unit attached to the second air filter unit. The second air filter unit may comprise a fine filter element configured to filter out particle matter (PM) of being 10 micrometers or smaller.

It is preferred that the first air filter unit forms a circumferential portion of the outer hull of the air filtering device. The first air filter unit forms e.g. the bottom or top part of the entire air filtering device and therefore a circumferential portion of the outer hull of the air filtering device. It is even more preferred when the first air filter unit forms partially the outer hull of the air filtering device in all directions, besides the direction which is directed to the air moving unit when the first air filter unit is in its operation position. E.g. the air filtering device may have a box like elongated shape and the bottom is formed by the first air filter unit. In this case, each of the four sides of the outer hull of the air filtering device are partially formed by the first air filter unit and the bottom, is entirely formed by the first air filter unit, when the first air filter unit is in its operating position.

In a variation has the air filtering device a rectangular cross-section with respect to a main air flow direction, in particular the first air filter unit and further units of the air filtering device have the same rectangular cross section with respect to the main air flow direction. In other words, the first air filter unit, the second air filter unit, any additional units and the air moving unit have according to this variation the same lateral rectangular extensions, which respect to the main flow direction of the air filtering device. The main flow direction is the direction of air flow through the air filtering device, which has the longest extension with respect to other air flow directions. In a variation, the air filtering device has a cuboid or box like shape, which is at least build up by a cuboid or box like shaped first air filter unit and a cuboid or box like shaped air moving unit and / or a cuboid or box like shaped second air filter unit. The different units are preferably stacked onto each other and interconnected via respective mechanisms with respect to each other.

The present disclosure further relates to a heat recovery unit for heat recovery between at least two fluids. The heat recovery unit typically comprises a heat exchanger, which can comprise first flow paths and second flow paths for heat exchange between at least two fluids, preferably in the form of two air streams. The heat recovery unit typically further comprises a first fan, which is configured to actively move a first fluid through the first flow paths of the heat exchanger and a second fan, which is configured to actively move a second fluid through the second flow paths of the heat exchanger. The heat recovery unit typically further comprises a first air filter unit, which comprises at least one air filter elements described above noted in more detail.

The heat recovery unit can comprise a heat exchanger with a stack of alternately arranged heat exchange elements of a first type and heat exchange elements of a second type. The heat exchange elements of the first type and the heat exchange elements of the second type may define alternatingly arranged first flow paths and second flow paths between each other. Each first flow path can extend from a first inlet to a first outlet and each second flow path may extend from a second inlet to a second outlet. The heat recovery unit may further comprise a first fan, comprising a first fan wheel, which is configured to actively move the first fluid through the first flow paths of the heat exchanger and a second fan comprising a second fan wheel, which is configured to actively move a second fluid through the second flow paths of the heat exchanger.

Each fan may comprise a fan wheel, which is configured to actively move the first fluid or second fluid through the first or second flow paths. The respective fan can be in the form of a sub-assembly, comprising a housing with therein arranged first or second fan wheel. The first and second fans typically comprise an engine and the thereto connected fan wheel, which is arranged within the housing. The first fluid can be outside air, and the first air filter unit may be arranged upstream of the heat exchanger, configured to pre-clean the outside air before entering the heat exchanger. The heat recovery unit can comprise a second air filter unit, which is arranged downstream of the heat exchanger and may be configured to clean the outside air, exiting the heat exchanger.

Both, the air filtering device and the heat recovery unit can be monitored by at least one sensor and a control unit, which may be able to communicate with another air filtering device respectively another heat recovery unit or an external control unit. The sensor may be configured to measure the pressure difference before and after the first air filter unit. In case that a change in the pressure difference indicates clogging of the filter, the control unit may indicate that the air filter element needs to be exchanged.

The present disclosure further relates to using an air filter element according to the present disclosure for an air filtering device according to the present disclosure and / or for a heat recovery unit according to the present disclosure.

It is to be understood that both the foregoing general description and the following detailed description present embodiments, and are intended to provide an overview or framework for understanding the nature and character of the disclosure. The accompanying drawings are included to provide a further understanding, and are incorporated into and constitute a part of this specification. The drawings illustrate various embodiments, and together with the description serve to explain the principles and operation of the concepts disclosed.

### BRIEF DESCRIPTION OF THE DRAWINGS

The herein described disclosure will be more fully understood from the detailed description given herein below and the accompanying drawings which should not be considered limiting to the disclosure described in the appended claims. The drawings are showing:
- Fig. 1: a perspective view on a first embodiment of the air filter element;
- Fig. 2: a top view on the embodiment of the air filter element according to Figure 1;
- Fig. 3: a top view on a schematic illustration of an embodiment of the air filter element;
- Fig. 4: a lateral view on a schematic illustration of the lattice structure of the embodiment of the air filter element according to Figure 3;
- Fig. 5: a lateral view on an embodiment of the air filter element with a lattice structure according to Figure 4 and electrostatically charged fibers arranged therein;
- Fig. 6: a top view onto a bundle of electrostatically charged fibers;
- Fig. 7: a lateral view on an embodiment of the air filter element with a lattice structure and electrostatically charged fibers arranged therein;
- Fig. 8: a detail view of the perforated top layer of the air filter element according to Figure 7
- Fig. 9: a schematic perspective view on a first embodiment of the air filtering device;
- Fig. 10: a schematic perspective view on a second embodiment of the air filtering device;
- Fig. 11: a schematic perspective view on the first embodiment of the air filtering device according to Figure 7 with partially removed first air filter unit and second air filter unit;
- Fig. 12: a schematic perspective view on a first embodiment of the compartment of the first air filter unit;
- Fig. 13: a lateral sectional schematic view on an embodiment of a heat recovery unit.

### DESCRIPTION OF THE EMBODIMENTS

Reference will now be made in detail to certain embodiments, examples of which are illustrated in the accompanying drawings, in which some, but not all features are shown. Indeed, embodiments disclosed herein may be embodied in many different forms and should not be construed as limited to the embodiments set forth herein; rather, these embodiments are provided so that this disclosure will satisfy applicable legal requirements. Whenever possible, like reference numbers will be used to refer to like components or parts.

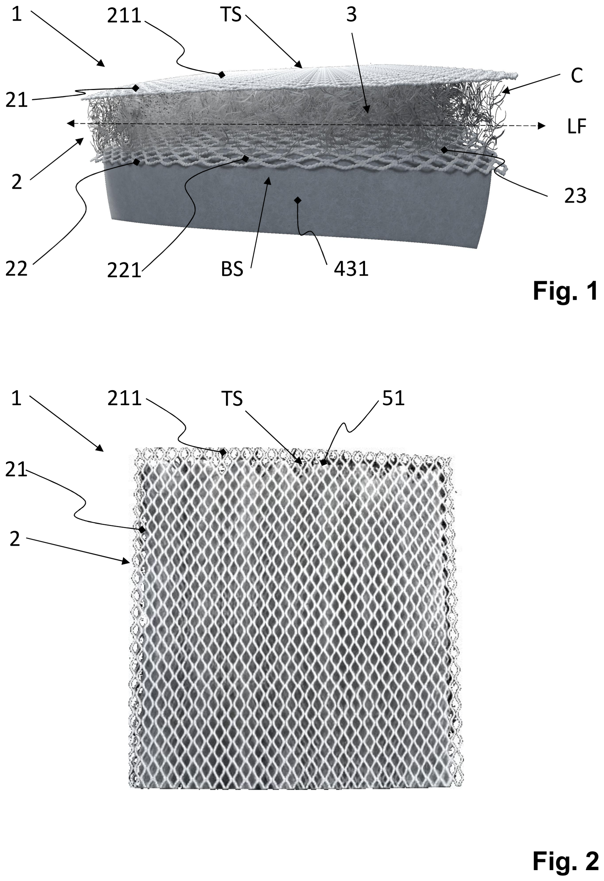

**Figures 1** and **2** show a complete air filter element 1 for filtering polluted air. The air filter element 1 comprises a lattice structure 2, which comprises a perforated top layer 21, which defines a top surface TS of the lattice structure 2 and comprises a number of first openings 211 enabling unfiltered air to enter the lattice structure 2, as shown by **Figure 1****.** The lattice structure 2 typically further comprises a perforated bottom layer 22, which defines a bottom surface BS of the lattice structure 2 and comprises a number of second openings 221 enabling filtered air to exit the lattice structure 2. The shown air filter element 1 is made integral with a fine filter element 431 in the form of a folded paper-based filter material. The fine filter element 431 is attached to the bottom surface BS of the air filter element 1.

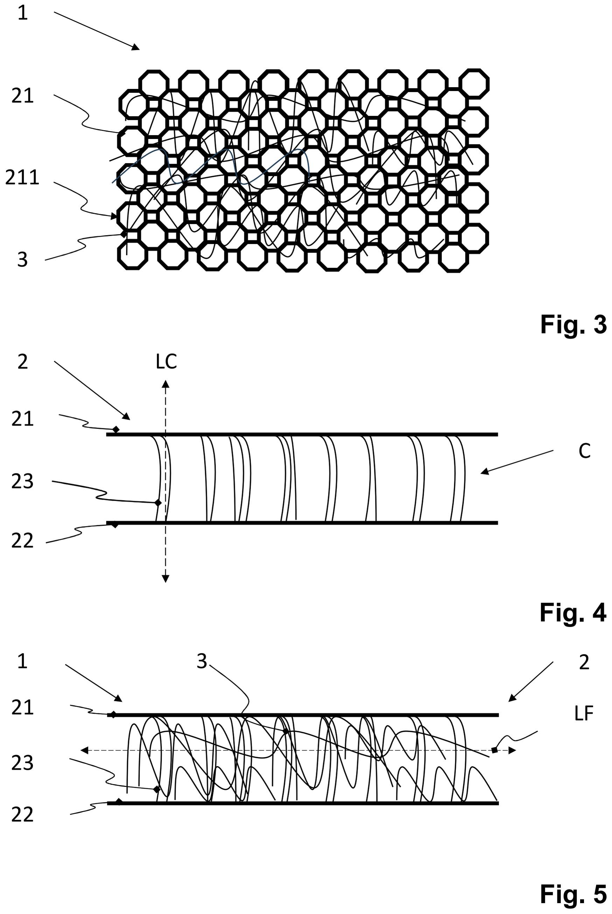

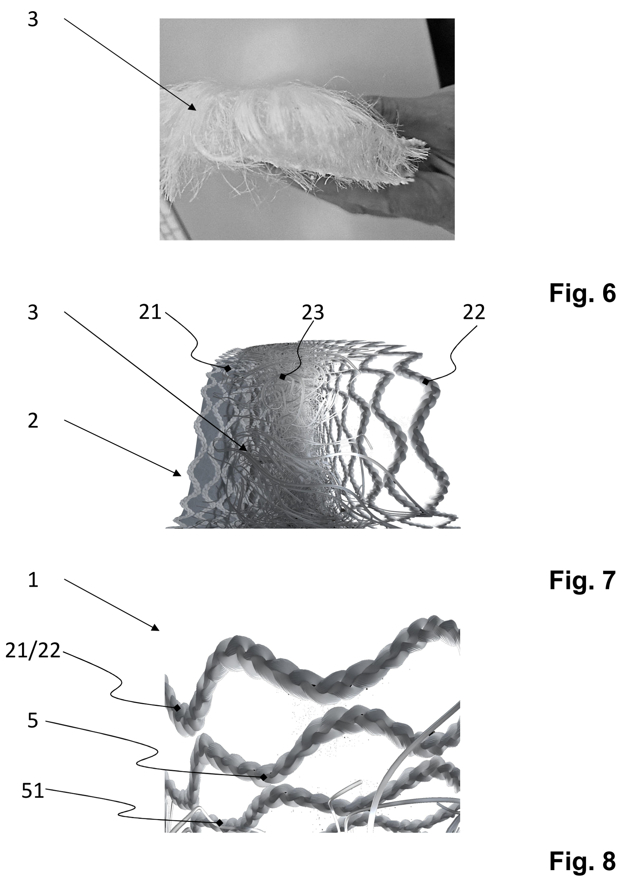

The lattice structure 2 further comprises a plurality of connection elements 23, which extend from the perforated top layer 21 to the perforated bottom layer 22 and interconnect the perforated top layer 21 to the perforated bottom layer 22. The shown lattice structure 2 is in the form of a sandwich structure with the connection elements 23 being sandwiched between the perforated top layer 21 and the perforated bottom layer 22. The perforated top layer 21 and the perforated bottom layer 22 are quasi two-dimensional. The connection elements 23 serve two purposes. First, the connection elements 23 interconnect the perforated top layer 21 and the perforated bottom layer 22, together providing the mechanical integrity of the lattice structure 2. Second, the connection elements 23 act as spacers between the perforated top layer 21 and the perforated bottom layer 22 to provide a cavity C between the perforated top layer 21 and the perforated bottom layer 22 as receiving space for the filter material. The connection elements 23 extend along a longitudinal direction and have a length of 35 mm and / or a diameter of 250 µm. The electrostatically charged fibers 3 each extend along a longitudinal direction LF and are arranged within the lattice structure 2 between the perforated top layer 21 and the perforated bottom layer 22 in a wavy manner. As best shown by **Figure 2****,** the perforated top layer 21 and the perforated bottom layer are in the form of a web, made from a flexible material, preferably from a thermoplastic elastomer. The shown web is formed by a plurality of strings 51, as can be obtained best from **Figure 8****.****Figures 3** to **5** show a schematic illustration of an embodiment of the air filter element 1. As best shown by **Figures 3** and **5****,** the air filter element 1 further comprises electrostatically charged fibers 3, which are arranged such that they cover the number of first openings 211 and the number of second openings and are configured to electrostatically attract particles from the polluted air passing through the air filter element 1. The electrostatically charged fibers 3 are arranged at least partially within the lattice structure 2 between the perforated top layer 21 and the perforated bottom layer 22. Such a design accounts for a compact solution and efficient filter results. The electrostatically charged fibers 3 are arranged in the cavity C between the perforated top layer 21 and the perforated bottom layer 22 and extend along a longitudinal direction LF and are arranged within the lattice structure 2in a wavy manner. This has the favorable effect, that the polluted air passing by the electrostatically charged fibers 3 travels a longer distance compared to electrostatically charged fibers which are arranged parallel to the perforated top 21 or bottom layer 22. The electrostatically charged fibers 3 are in addition preferably bonded to the connection elements 23.

**Figure 4** shows the lattice structure 2 which comprises a plurality of connection elements 23, which extend from the perforated top layer 21 to the perforated bottom layer 22 and interconnect the perforated top layer 21 to the perforated bottom layer 22. The shown lattice structure 2 is in the form of a sandwich structure with the connection elements 23 being sandwiched between the perforated top layer 21 and the perforated bottom layer 22. The perforated top layer 21 and the perforated bottom layer 22 are quasi two-dimensional. The connection elements 23 serve two purposes. First, the connection elements 23 interconnect the perforated top layer 21 and the perforated bottom layer 22, together providing the mechanical integrity of the lattice structure 2. Second, the connection elements 23 act as spacers between the perforated top layer 21 and the perforated bottom layer 22 to provide a cavity C between the perforated top layer 21 and the perforated bottom layer 22 as receiving space for the filter material.

**Figure 6** shows a bundle of the electrostatically charged fibers 3. The electrostatically charged fibers 3 are e.g. made from a polymer material which can be electrostatically charged. The shown electrostatically charged fibers 3 have a length of 300 mm and a diameter of 50 µm. The shown electrostatically charged fibers 3 are made from polypropylene. Polypropylene provides the desired electrostatic properties for capturing the particles from the air.

**Figure 7** shows how the electrostatically charged fibers 3 are arranged in the lattice structure 2 between the perforated top layer 21 and the perforated bottom layer 22. The electrostatically charged fibers 3 are arranged such they form a woven structure with the connection elements 23. Besides weavings the electrostatically charged fibers 3 together with the shown connection elements 23, which are also in the form of fibers, the electrostatically charged fibers 3 are bonded to the connection elements 23 by an adhesive or are bonded to the connection elements 23 by a thermal bond. This ensures that the electrostatically charged fibers 3 remain stationary with respect to the connection elements 23, even when the air filter element is installed and the electrostatically charged fibers 3 are exposed to negative pressure or overpressure or high air flow speeds during operation.

**Figure 8** shows a detailed view of the perforated top layer of the air filter element 1. The perforated top layer 21 and the perforated bottom layer 22 are both in the form of a web 5. The perforated top layer 21 and the perforated bottom layer 22 are made from a flexible material, in the shown variation a thermoplastic elastomer. The perforated top layer 21 and / or the perforated bottom layer 22 are preferably made from a polymer material, which is configured to be electrostatically chargeable. The web 5 is formed by a plurality of strings 51 and a majority of the connection elements 23 are attached to the strings 51. The strings 51 are made from individual fibers/yarns to increase the surface of the strings 51. The shown strings 51 are connected to the connection elements 23, which are in the form of flexible fibers, which are bonded to the perforated top layer 21 and the perforated bottom layer 22, thermally or by an adhesive.

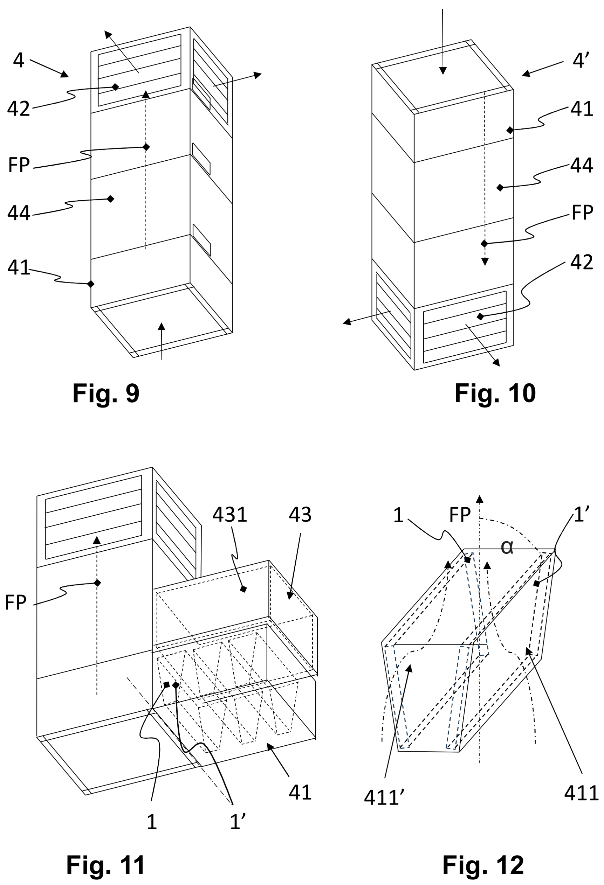

**Figures 9** and **10** show two embodiments of air filtering devices 4, 4' for filtering polluted air. The air filtering devices 4, 4' both extend along a flow path FP and each comprise along the flow path FP a first air filter unit 41. Both air filtering devices 4, 4' further comprise an air moving unit 42, which is configured to move unfiltered air from outside the air filtering device 4, 4' through the first air filter unit 41 which is configured to filter the outside air. The air moving unit 42 partially defines an outer housing 44 of the air filtering device 4, 4'. The shown air filtering devices 4, 4' have a box like elongated shape and the bottom respectively the top is formed by the first air filter unit 41. Each of the four sides of the housing 44 of the air filtering devices 4, 4' are partially formed by the first air filter unit 41.

The shown air moving units 42 are each configured to move air through the air filtering device 4. The shown air moving units 42 both comprise a fan, which is configured to move air through the first air filter unit 41. The air moving units 42 of the air filtering devices 4, 4' form an air stream through the air filtering device and are arranged on the suction side of the air filtering device, i.e. down-stream with respect to the air filter unit 41. The first air filter unit 41 forms a circumferential portion of the housing of the air filtering device 4. In the shown variations the first air filter unit 41 forms the bottom respectively the top part of the entire air filtering device 4, 4'.

As shown by **Figures 11** and **12****,** the air filter elements 1, 1' are arranged within the first air filter unit 41 inclined with respect to the flow path FP by an angle α. This arrangement has the advantage that the cross-sectional area of the air filter element 1, 1' is improved. If the air filter element 1, 1' is arranged parallel or perpendicular to the flow path FP, the air passes through the air filter element 1, 1' essentially perpendicular to the perforated top or bottom layer.

As can be obtained best from **Figure 11****,** the first 41 and second 43 air filter units are movable interconnected, in the shown variation slidably and / or pivotable interconnected to the air filtering device 4, such that the respective air filter unit 41, 43 is by a movement moveable from its operating position to its maintenance position, enabling access to the air filter element 1 in the first air filter unit 41 or the fine filter element 431 in the second air filter unit. The operating position is thereby the position in which the first 41 and / or second 43 air filter unit is arranged within the housing of the air filtering device 4. The shown position is the maintenance position in which the first 41 and second 43 air filter unit are arranged pivoted out from the interior of the air filtering device 4, to allow access to the respective air filter element 1, 431.

The first air filter unit 41 is via a first hinge interconnected to the second air filter unit 43. And the second air filter unit 43 is via a second hinge interconnected to the air moving unit 42. All of the features described above and hereinafter with respect to the first air filter unit 41 may also apply mutatis mutandis to the second air filter unit 43. The movement of the second air filter unit 43 from the operating position to the maintenance position may also move the first air filter unit 41 attached to the second air filter unit 43. The second air filter unit 43 comprises a fine filter element 431 configured to filter out particle matter (PM) of being 10 micrometers or smaller.

As can be obtained best from **Figure 12** the air filter elements 1 are arranged inclined with respect to the flow path FP. The air passes through the filter elements 1, 1' diagonally and therefore travels a longer distance, which increases the filter effect. The shown compartment 411 of the first air filter unit 41 is configured to receive two air filter elements 1. The compartments 411, 411' each comprise slots, in which one air filter element 1, 1' can be inserted. This allows for an easy replacement of the filter elements 1, 1'. To allow that the air filter elements 1, 1' are arranged within the first air filter unit 41 inclined with respect to the flow path, the shown compartment is V-shaped and two air filter elements 1 are arranged within the compartment 411, in the shown variation opposite to each other.

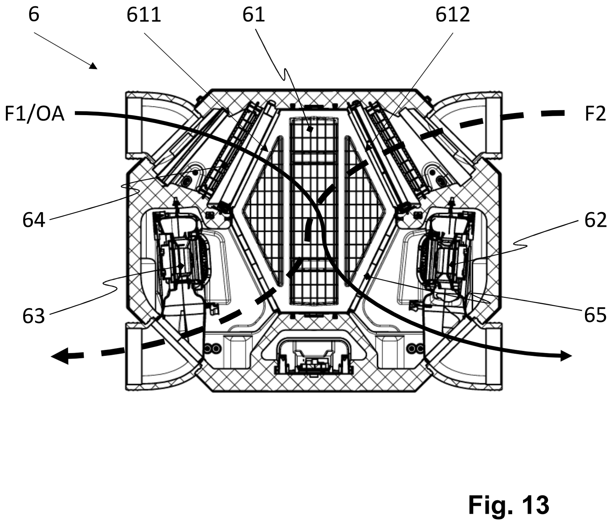

**Figure 13** shows a lateral sectional view of a heat recovery unit 6 with a therein arranged heat exchanger 61. The shown heat recovery unit 6 comprises a heat exchanger 61 with a stack of alternatingly arranged heat exchange elements of a first type and heat exchange elements of a second type. The heat exchange elements of the first type and the heat exchange elements of the second type define alternatingly arranged first flow paths 611 and second flow paths 612 between each other. Each first flow path 611 extends from a first inlet to a first outlet and each second flow path 612 extends from a second inlet to a second outlet.

The shown variation of the heat recovery unit 6 further comprises a first fan 62, comprising a first fan wheel, which is configured to actively move a first fluid F1 through the first flow paths 611 of the heat exchanger 61 and a second fan 63 comprising a second fan wheel, which is configured to actively move a second fluid F2 through the second flow paths 612 of the heat exchanger 61. The fans each comprise a fan wheel, which is configured to actively move the first fluid F1 or second fluid F2 through the first 611 or second 612 flow paths. The shown fans 62, 63 are each in the form of a sub-assembly, comprising a housing with therein arranged first or second fan wheel. The first 62 and second 63 fans typically comprise an engine and the thereto connected fan wheel, which is arranged within the housing.

The shown variation of the heat recovery unit 6 further comprises a first air filter unit 64, which comprises at least one air filter element 1 as described above noted. The first fluid F1 is outside air OA and the first air filter unit 64 is arranged upstream of the heat exchanger 61, configured to pre-clean the outside air OA before entering the heat exchanger 61. The heat recovery unit 6 comprises a second air filter unit 65, which is arranged downstream of the heat exchanger 61 and is configured to clean the outside air OA, exiting the heat exchanger 61.

Rather, the words used in the specification are words of description rather than limitation, and it is understood that various changes may be made without departing from the Spirit and scope of the disclosure.

### LIST OF DESIGNATIONS

- 1: Air filter element
- 2: Lattice structure
- 21: Top layer
- 211: First openings
- 22: Bottom layer
- 221: Second openings
- 23: Connection elements
- 3: Electrostatically charged fibers
- 4, 4': Air filtering device
- 41: First air filter unit
- 411: Compartments
- 42: Air moving unit
- 43: Second air filter unit
- 431: Fine filter element
- 44: Housing
- 5: Web
- 51: String
- 6: Heat recovery unit
- 61: Heat exchanger
- 611: First flow path
- 612: Second flow path
- 62: First fan
- 63: Second fan
- 64: First air filter unit
- 65: Second air filter unit
- LF: Longitudinal direction fibers
- LC: Longitudinal direction connection element
- TS: Top surface
- BS: Bottom surface
- FP: Flow path
- F1: First fluid
- F2: Second fluid
- OA: Outside air
- α: Angle between air filter element and flow path
- C: Cavity

## Claims

1. An air filter element (1) for filtering polluted air, the air filter element (1) comprising
a. a lattice structure (2) comprising:
i. a perforated top layer (21), which defines a top surface (TS) of the lattice structure (1) and which comprises a number of first openings (211) enabling unfiltered air to enter the lattice structure;
ii. a perforated bottom layer (22), which defines a bottom surface (BS) of the lattice structure (2) and comprises a number of second openings (221) enabling filtered air to exit the lattice structure;
iii. a plurality of connection elements (23), which extend from the perforated top layer (21) to the perforated bottom layer (22) and interconnect the perforated top layer (21) to the perforated bottom layer (22), and
b. electrostatically charged fibers (3), which are arranged such that they cover the number of first openings (211) and / or the number of second openings (221) and are configured to electrostatically attract particles from the polluted air passing through the air filter element.

2. The air filter element (1) according to claim 1, **wherein** the electrostatically charged fibers (3) are arranged at least partially within the lattice structure (2) between the perforated top layer (21) and the perforated bottom layer (22), the electrostatically charged fibers (3) preferably extend along a longitudinal direction (LF) and are arranged within the lattice structure (2) between the perforated top layer (21) and the perforated bottom layer (22) in a wavy manner.

3. The air filter element (1) according to claim 2, **wherein** the electrostatically charged fibers (3) are arranged such they form a woven structure with the connection elements (23).

4. The air filter element (1) according to claim 2 or 3, **wherein** the electrostatically charged fibers (3) are bonded to the connection elements (23) by an adhesive or are bonded to the connection elements (23) by a thermal bond.

5. The air filter element (1) according to any of the preceding claims, **wherein** the perforated top layer (21) and / or the perforated bottom layer (22) is a web (5), and wherein the perforated top layer (21) and / or the perforated bottom layer (22) is/are made from a flexible material, preferably from a thermoplastic elastomer, with the web (5) preferably being formed by a plurality of strings (51) made from intertwined strands and a majority of the connection elements (23) are attached to the strings (51).

6. The air filter element (1) according to any of the preceding claims, **wherein** a majority of the connection elements (23) is a flexible fiber which is bonded to the perforated top layer (21) and the perforated bottom layer (22), preferably thermally or by an adhesive, with the connection elements (23) preferably extending along a longitudinal direction (LC) and having a length being from 3 mm to 100 mm, preferably from 20 mm to 50 mm and more preferably from 15 mm to 35 mm and / or a diameter being from 10 µm to 250 µm, preferably from 25 µm to 150 µm, more preferably from 50 µm to 100 µm.

7. Method for producing an air filter element (1), preferably an air filter element (1) according to any of claims 1 to 6, comprising at least the following method steps:
a. Providing a lattice structure (2) comprising:
i. a perforated top layer (21), which defines a top surface (TS) of the lattice structure (1) and which comprises a number of first openings (211) enabling unfiltered air to enter the lattice structure;
ii. a perforated bottom layer (22), which defines a bottom surface (BS) of the lattice structure (2) and comprises a number of second openings (221) enabling filtered air to exit the lattice structure;
iii. a plurality of connection elements (23), which extend from the perforated top layer (21) to the perforated bottom layer (22) and interconnect the perforated top layer (21) to the perforated bottom layer (22), and
b. Arranging electrostatically charged fibers (3) in the lattice structure (2), which electrostatically charged fibers (3) are arranged such that they cover the number of first openings (211) and / or the number of second openings (221) and are configured to electrostatically attract particles from the polluted air passing through the air filter element.

8. Method according to claim 7, **wherein** the lattice structure (2) is inherently stable, so that the perforated top layer (21) is separated from the perforated bottom layer (22) by means of the plurality of connection elements (23), preferably inherently stable even before arranging the electrostatically charged fibers (3) in the lattice structure (2), the electrostatically charged fibers (3) are preferably blown into the lattice structure (2).

9. Method according to any of claims 7 or 8, **wherein** the electrostatically charged fibers (3) are arranged such they form a woven structure with the connection elements (23) and/or are bonded to the connection elements (23) by an adhesive or are bonded to the connection elements (23) by a thermal bond.

10. An air filtering device (4) for filtering polluted air, the air filtering device (4) extends along a flow path (FP) and comprises along the flow path
a. a first air filter unit (41), which comprises at least one air filter element (1) according to any one of claims 1 to 6 or an air filter element (1) obtained by the method according to any one of claims 7 to 9;
b. an air moving unit (42), which is configured to move unfiltered air from outside the air filtering device through the first air filter unit (1) which is configured to filter the outside air.

11. The air filtering device (4) according to claim 10, **wherein** the air filter element (1) is arranged within the first air filter unit (41) inclined with respect to the flow path (FP), preferably by an angle (α) being from 10° to 80°, preferably between 15° and 45° and more preferably between 20° and 35°.

12. The air filtering device (4) according to claim 10 or 11, **wherein** the first air filter unit (41) comprises compartments (411), which are each configured to receive at least two air filter elements (1), with the compartments (411) preferably being V-shaped and the two air filter elements (1) being arranged opposite to each other in the V-shaped compartments.

13. The air filtering device (4) according to any of claims 10 to 12, **wherein** the air filtering device (4) comprises a second air filter unit (43) which is arranged along the flow path (FP) downstream of the first air filter unit (41) and is configured to clean the air pre-cleaned by the first air filter unit (41), with the second air filter unit (43) preferably comprising a fine filter element (431) configured to filter out particle matter (PM) of being 10 micrometers or smaller.

14. A heat recovery unit (6) comprising
a. a heat exchanger (61) comprising first flow paths (611) and second flow paths (612) for heat exchange between at least two fluids, preferably in the form of two air streams,
b. a first fan (62) being configured to actively move a first fluid (F1) through the first flow paths (611) of the heat exchanger (61) and a second fan (63) being configured to actively move a second fluid (F2) through the second flow paths (612) of the heat exchanger (61);
c. a first air filter unit (64), which comprises at least one air filter element (1) according to any one of claims 1 to 6 or an air filter element (1) obtained by the method according to any of claims 7 to 9.

15. The heat recovery unit (6) according to claim 14, **wherein** the first fluid (F1) is outside air (OA) and the first air filter unit (64) is arranged upstream of the heat exchanger (61) and is configured to pre-clean the outside air (OA) before entering the heat exchanger (61) and the heat recovery unit (6) preferably comprises a second air filter unit (65) which is arranged downstream of the heat exchanger (61) and is configured to clean the outside air (OA) exiting the heat exchanger (61).

16. Use of an air filter element (1) according to any of claims 1 to 6 or an air filter element (1) obtained by the method according to any of claims 7 to 9 for an air filtering device (4, 4') according to any of claims 10 to 13 and / or for a heat recovery unit (6) according to any of claims 14 to 16.
